# EUROPEAN PATENT APPLICATION

(11) **EP 1 953 893 A2**
(43) Date of publication of application: **06.08.2008**
(21) Application number: 08425046.3
(22) Date of filing: 30.01.2008
(51) Int. Cl.: H02J 9/02, H05B 37/02

(54) **Centralized emergency lighting plant with functionalities integrated with ordinary lighting**

(30) Priority: 31.01.2007 IT VI20070030
(71) Applicant: Beghelli S.p.A., 40050 Monteveglio, Bologna (IT)
(72) Inventor: Beghelli, Gian Pietro, 40050 Monteveglio (IT)
(74) Representative: Iannone, Carlo Luigi

(57) **Abstract**

A centralized emergency lighting plant with functionalities integrated with the ordinary lighting, wherein the electric supply lines (19) of the lighting apparatus (11) share on the same conductors both the apparatus (11) which work in an ordinary way and those which operate in emergency too. Moreover, each lighting apparatus (11) automatically recognizes the emergency condition according to the type of supply signal, variable in amplitude, frequency and/or phase, present in input and it can be programmed and configured by a control station (27) of the system, through radio (R), to work in accordance with the desired performance, which can also be changed by the user at will at any time.

## Description

The present invention relates to a centralized emergency lighting plant with functionalities integrated with ordinary lighting.

More specifically, the invention concerns an emergency lighting system, of the centralized battery type, which allows the complete integration of the emergency lighting function, so that the same ordinary lighting apparatus are also emergency lighting apparatus and can be configured and programmed in their functionalities by a control station.

A centralized emergency or safety lighting plant consists of one or more electrical energy sources, which supply the lighting apparatus located in the periphery.

The energy source and the lighting apparatus are connected by a series of safety circuits, installed with particular shrewdness of reliability for the proper functioning of the emergency lighting.

In theory, it is admitted as a safety source also a public network supply separated and independent from the ordinary one, so as to it is highly unlikely that the two power supplies of the relative electric lines can simultaneously lack; the probability that the two power supplies of the lines can simultaneously lack should be lower than that of the non-activation of a generating set.

In practice, however, the necessary information to judge this independence are rarely available and, therefore, such a solution is not used.

Generally, a static supply group, which draws the energy from storage batteries, with output in DC or AC, or a generating set is used to supply centralized safety lighting plants.

It is also possible to use two sources in a complementary manner, for example an uninterruptible power supply (UPS) and a generating set, in which the uninterruptible power supply feeds the emergency plant for the time necessary for the generating set to start and to become operative.

The supplier in permanent DC is used when it is necessary to feed, without an interruption, a load at the charge voltage of the battery (relays, contactors, motors, etc.); the load is supplied by a rectifier bridge directly from the network and, when there is no voltage on the network, the load is supplied by the battery without the slightest supply interruption (null intervention time).

By adding an inverter downstream of the battery a supplier in non permanent AC is obtained; with this solution the load, not fed in ordinary conditions, is fed, in the event of lack of network supply, through the inverter (usually protected against the overcurrents by special electronic circuits, suitable to limit the current lowering the output voltage), which converts the battery voltage in a alternating sinusoidal voltage at low distortion, stabilized in voltage and frequency according to the variation of the load and the battery voltage.

In case of permanent AC supply, in presence of voltage, the load is directly fed from the network and, simultaneously, a battery charger provides for the battery recharging; in absence of network voltage, the load is switched on the inverter, which converts the battery voltage in an alternating voltage at low distortion, by means of a contactor.

Therefore, it is clear that, in the existing plants, it is necessary to modify the pre-existing electric supply lines of the lighting apparatus in order that the same can operate in emergency mode; furthermore, the operation of each emergency apparatus of traditional type is determined during the realization of the plant as a result of the choice of emergency apparatus and of their configuration (usually acting on each emergency apparatus), in static way and in accordance with prearranged desired performance, which, however, are fixed once and for all on the plant installation and cannot be changed at user's will at any time.

Therefore, within the abovementioned requirements, an aim of the present invention is to realize a centralized emergency lighting plant with functionalities integrated with ordinary lighting, which allows to consider the same ordinary lighting apparatus also emergency lighting apparatus, since each lighting apparatus can be on or off in case of emergency and automatically recognizes the emergency condition by the electric state (DC or special AC) of the line to which said lighting apparatus is connected.

Another aim of the present invention is to realize a centralized emergency lighting plant with functionalities integrated with ordinary lighting, which permits to schedule the emergency operation of any lighting apparatus of the plant, which, then, can be switched on in case of emergency with any desired light intensity and configured by a control station and for any predetermined emergency time, consistent with the energy available in the centralized batteries.

A further aim of the present invention is to realize a centralized emergency lighting plant with functionalities integrated with ordinary lighting, which allows to implement its functionalities in the existing plants, without changing the most onerous part of the installation part, namely the electric supply lines of the pre-existing lighting apparatus, but only by acting on the electric supply boards, with a significant competitive advantage in terms of installation easiness and quickness and of outstanding reduction of the installation and operating costs.

These and other aims are achieved by a centralized emergency lighting plant with functionalities integrated with ordinary lighting, according to the attached claim 1; other technical features of detail are present in the subsequent claims.

Advantageously, all the lighting apparatus are connected on the same electric line, both those which are switched on in case of emergency and those which are switched off in case of emergency and every lighting apparatus is provided with an electronic supplier (ballast) for controlling the fluorescent lamps with which said lighting apparatus is equipped. Each electronic supplier for controlling fluorescent lamps is also equipped with a built-in two-way radio and can be controlled and reconfigured by radio; it is possible to configure by radio all the operating characteristics of the supplier and, in particular, its mode of operation when it is active for the ordinary lighting (autodimmer, fixed power), its mode of operation in case of emergency (dimmer level, lighting state in case of emergency) and the values of all the operational parameters.

In particular, each electronic supplier for controlling fluorescent lamps is able to decode some parameters of its power supply (amplitude, frequency, phase) in the early moments of the supply presence on its input, to determine its operation state (switching on in the state of ordinary lighting or switching on in the state of emergency lighting or switching off).

From the circuit point of view, in the lighting system, the same devices are connected to each supply cable of the lighting apparatus, which, by changing their way of functioning on the basis of the manner of dispensing the electric energy, will switch on, alternately, in ordinary modality or in emergency modality.

Further features and advantages of a centralized emergency lighting plant with functionalities integrated with ordinary lighting, according to the present invention, will be more evident from the description that follows, relative to an illustrative and preferred, but not limited to, example of implementation and from the attached drawings, where:
- figure 1 shows an applicatory circuit diagram of a centralized emergency lighting plant with functionalities integrated with ordinary lighting, according to the invention;
- figure 2 shows a provisional block diagram of the emergency integrable lighting plant of figure 1, according to the present invention;
- figure 3 shows an example of circuit diagram of the emergency integrable lighting plant of figure 1, according to the invention, as applied to a specific ordinary lighting plant.

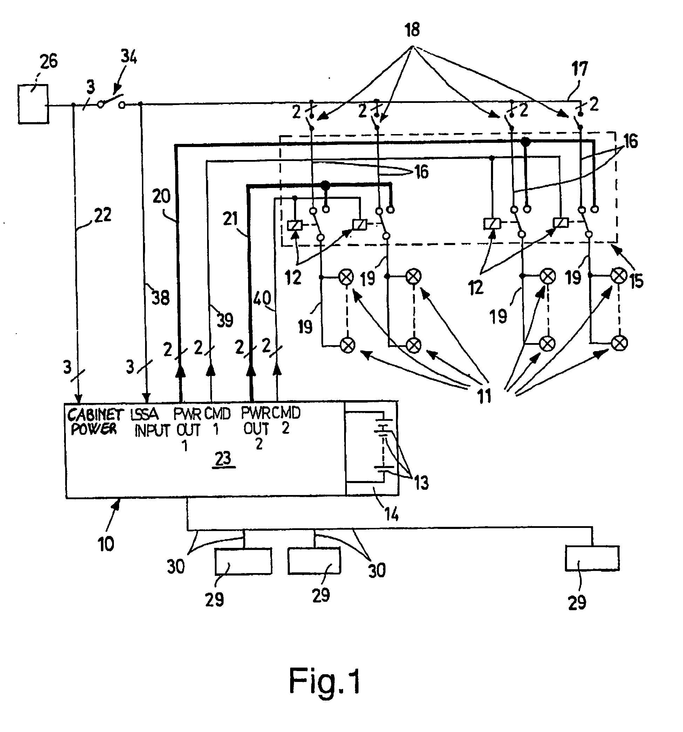

In particular, the attached figure 1 shows the electrical connections necessary to the insertion of the emergency function in a typical industrial electric board 24, which supplies a lighting section. The portion 23 of the emergency cabinet 10 contains the electronic devices necessary to provide the electric energy for the operation of the emergency lighting apparatus, such as the battery charger of the centralised batteries 13, the measurement instruments of the presence of the network supply (230 Volt in AC) on the controlled lines (LSSA INPUT and line 38), the central electronic unit (CPU) for the management of the operation logic and the system diagnostics, the power card of output, each of which provides the supply power to a certain group of lighting apparatus 11 (PWR OUT outputs 1, 2 and the respective electric lines 20, 21) and is able to control at least a remote control switch 12 (with the output CMD 1, CMD 2 and the respective electric lines 39, 40).

A second portion 14 of the cabinet 10, which is normally stacked under the portion 23 of the electronic devices, contains the batteries 13, which in illustrative and preferred, but not limiting, executions consist of eighteen elements in series, 12 Volt each in DC, for a resulting voltage of nominal 216 Volt in DC.

The additional part which must be introduced into the electric board 24 to connect the electric supply lines 16, 19 of the lighting apparatus 11 to the emergency cabinet 10 is dashed and generally indicated with 15 in figure 1.

In particular, a remote control switch 12 for every separate electric supply line 16, 19 of each series of the lighting apparatus 11 must be added to the existing plant.

The remote control switches 12 are connected in such a way as to, in the rest position (shown in figure 1), the lighting apparatus 11 are supplied by the ordinary electric supply line 17 through the existing switches 18 and the three-phase disconnecting switch 34 of the lighting subsection to which they belong. When it is necessary to activate the emergency function the remote control switches 12 are automatically energized and the emergency electric power generated by the cabinet 10 is provided to the electric lines 19 through the emergency electric lines 20, 21.

In that case, the lighting apparatus 11 connected to the electric lines 12 automatically recognize to be supplied by an emergency source (in DC or in AC with certain values of amplitude, frequency and/or phase) and regulate their operation accordingly, so as to:
- the apparatus 11 which are programmed to switch on in case of emergency switch on reaching automatically a prefixed luminous flux and, in practice, such apparatus 11 reduce the luminous flux to the level necessary to secure the required illumination on the ground in the various areas (this is typically achieved by reducing the luminous flux to values of about 10% of the nominal flow, equivalent for example to a power consumption of about 25-30 Watt for each apparatus, where each apparatus 11 is of the type with two 58 Watt fluorescent lamps),
- while the apparatus 11 which are programmed to switch off in case of emergency remain off.

The cabinet 10 continuously monitors the supply line 22 downstream the three-phase disconnecting switch 34 to start up the emergency function in the event of lack of supply and, when the supply network lacks or the three-phase disconnecting switch 34 manually opens, the emergency cabinet 10 reveals the lack of supply and activates the emergency function.

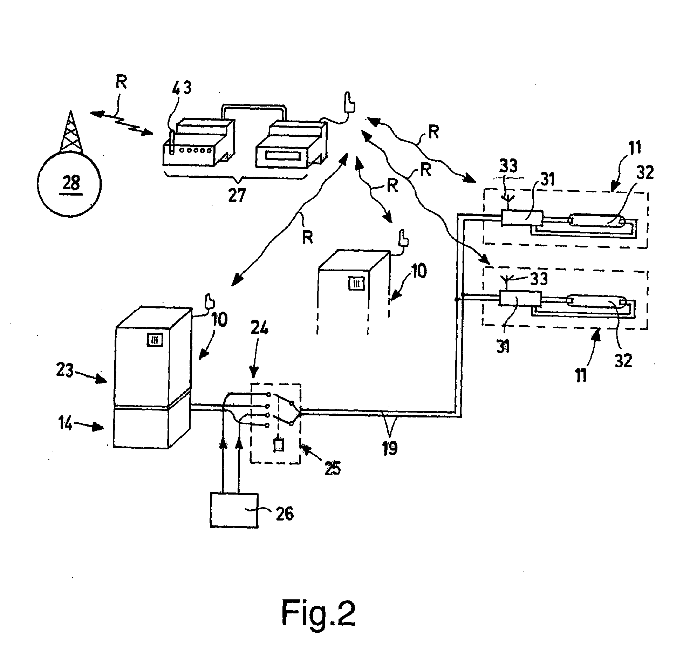

Figure 2, which illustrates the integrated lighting system as a whole, shows that the plant, in general, provides for an emergency supply cabinet 10 for each electric board 24, which contains a supply subsection 25 (which picks up the electric energy from the ordinary supply network 26) of the electric lines 19 of the lighting apparatus 11.

The electronic processing and control unit (CPU) located inside each emergency cabinet 10 is provided with a FH DSSS two-way radio, which allows the communication with the other cabinet 10 of the system and with a control station 27, which communicates with each lighting apparatus 11, by means of two-way radio 33 integrated in their respective electronic supplier 31 controlling each fluorescent lamp 32 of every lighting apparatus 11.

The control station 27 is single in the system and performs the following functions:
- as far as the ordinary lighting is concerned, it collects the consumption information and performs the diagnostics in ordinary operation;
- as far as the emergency lighting is concerned, it collects the diagnostics information in emergency operation.

Furthermore, the control station 27, along with its built-in GSM modem 43, represents the interface for the remote control of the system, through the GSM network 28.

Each lighting apparatus 11 used in emergency performs the test of the emergency function every time the cabinet 10 starts up such a function.

Indeed, every cabinet, periodically and according to a calendar scheduled in the system, performs operation tests and autonomy tests supplying its emergency electric lines 19, at prefixed hours and for prearranged times.

During such operation intervals, every connected apparatus 11, for which the emergency function is active, records in its memory its diagnostics information to make them available to the control station 27 of the system.

On the other hand, the control station 27, in coordination with the electronic control units (CPU) of the various cabinets 10, through the radio network R, is able to question each lighting apparatus 11 used in emergency, collecting the results of the emergency operation tests performed by the individual apparatus 11, according to the criteria scheduled in the calendar of the system.

The system also provides the control of signallers 29 of exodus routes, which are connected to the emergency cabinets 10 through dedicated electric lines 30.

These signallers 29 can be programmed by the electronic control unit (CPU) of the cabinet 10 to which they are connected, in order to operate in permanent or non-permanent illumination.

In practice, every electric line of a cabinet 10 can handle up to about one hundred lighting apparatus 11 of the type with a 8 Watt fluorescent lamp, each of which has its own identification code (address).

The operation is always of the centralized battery type, i.e. the lighting apparatus 11 receive energy directly from the cabinet 10 to which they are connected, while the diagnostics of the emergency function is selective, in the sense that the cabinet 10 verifies the correct operation of each single connected lighting apparatus 11, recognizing the bad functioning of the individual apparatus 11 and identifying it in the system through its code.

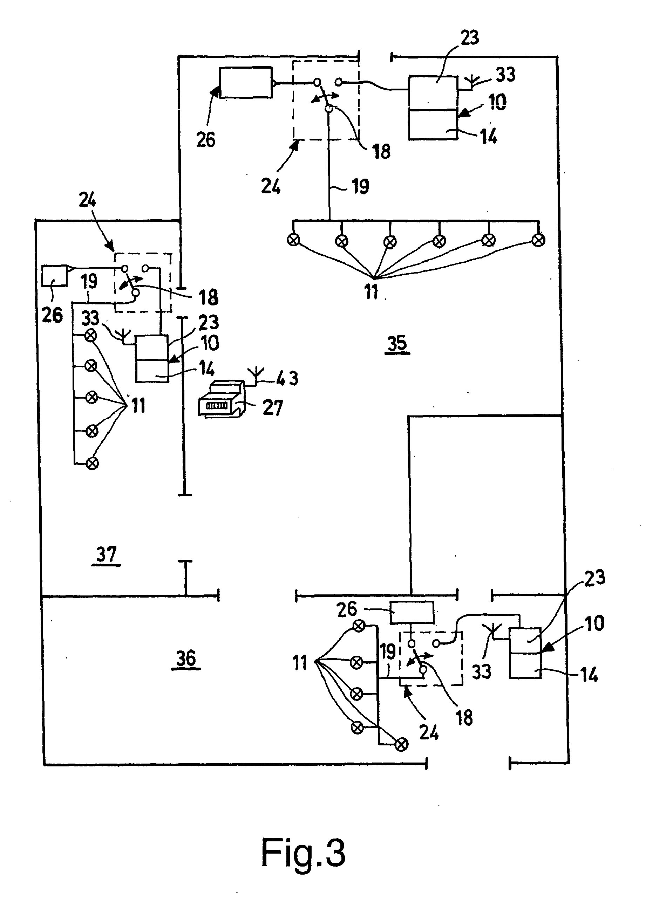

Figure 3 shows an example of an application diagram of a lighting plant implemented, in accordance with the present invention, in a shed of a factory.

In such a case, there are three boards 24, in which the control organs of the electric lines 19 of lighting apparatus 11 are situated.

Near each of these three boards 24, which divert the supply from the electric system 26, there is an emergency cabinet 10 provided with its batteries 13. In this way it is no necessary to distribute the emergency supply among the various shed areas 35, 36, 37, but each area has its own emergency source separated and independent from the others, with obvious advantages both from the point of view of the safety, and from the point of view of the simplicity of application of the emergency lighting apparatus 11 with centralized battery.

Practically, since every emergency source 11 is close to its competence electric board 24, it is not necessary to lay down, for long distances, additional supply electric lines separated or connected to flame-retardant cables, and this remarkably simplifies the connection and limits the relative costs.

As shown in the sketched map in figure 3, at the largest part of the shed, indicate with the reference number 35, a lighting board 24 is placed.

In this feasible example, the board contains (not illustrated in figure 3) two 16 Ampere three-phase disconnecting switches, each of which supplies different single-phase electric lines 19 of electric supply of the lighting apparatus 11.

In particular, in the described example, a first disconnecting switch, placed on the left side of the portion 35 of the shed, supplies six electric lines 19, each with a 16 Ampere single-phase switch 18, which pilots six lighting apparatus 11, while a second disconnecting switch, placed on the right side of the portion 35 of the shed, supplies ten electric lines 19, each with a 16 Ampere single-phase switch 18, which pilots six lighting apparatus 11; an eleventh electric line 19 pilots four apparatus 11 used for the lighting of the signallers 29 of exodus routes.

In all, one hundred lighting apparatus 11 of the type with two fluorescent lamps of 58 Watt each are connected to this board 24 of the area 35 of the shed.

In the same space 35 of the shed, there is the control station 27, provided with GSM modem 43.

In the space 37 of the shed there is a second board 24, which houses a 16 Ampere three-phase disconnecting switch for the lighting section of this space 37.

In such a board 24, the three electric supply lines 19 of the existing lighting apparatus 11 are controlled by three switches 18, relayed to obtain various ways of switching on from several points of the space 37.

The three electric supply lines 19 are connected respectively to fourteen, thirteen and seventeen lighting apparatus 11 for a total of 44 apparatus, each having two fluorescent lamps of 58 Watt each.

In the space 36 of the shed there is a third board 24, which houses a 16 ampere three-phase disconnecting switch for the lighting section of such space 36.

In this board 24, the three electric supply lines 19 of the existing lighting apparatus 11 are controlled by three switches 18, relayed to obtain various ways of switching on from several points of the space 36. The three electric supply lines 19 are connected respectively to twelve, twelve and ten lighting apparatus 11, for a total of 34 apparatus, each having two fluorescent lamps of 58 Watt each.

The installation of the emergency function, according to the plant object of the present invention, provides the placement of three emergency cabinets 10 close to the three boards 24, with each emergency cabinet 10 sized with batteries 13 of dimension suitable to assure the emergency lighting for the desired number of apparatus 11 and time, according to the established safety requirements.

Beside every existing board 24, in addition to the emergency cabinet 10, there is a small electric board containing the remote control switch 12 necessary to switch over the supply electric lines 19 of the lighting apparatus 11 in case of emergency.

In relation to the illustrated case, a size for obtaining the emergency function is exemplified below:
- one emergency apparatus 11 for each electric line 19 in the area 35 of the shed, for a maximum power of 560 Watt in emergency (16 apparatus * 35 Watt = 560 Watt),
- six emergency apparatus 11 in the area 37 of the shed, for a maximum power of 210 Watt in emergency (6 apparatus * 35 Watt = 210 Watt) and
- six emergency apparatus in the area 36 of the shed, for a maximum power of 210 Watt in emergency (6 apparatus * 35 Watt = 210 Watt).

Assuming an emergency autonomy of one hour, the cabinet 10 of the area 35 is equipped with eighteen 12 Volt batteries, 7 Ampere/h each, in order to assure the emergency function for one hour.

The size margin of the batteries is 2.7 since, with 560 watt in emergency, the nominal power available from the 1 C batteries is equal to nearly 1500 Watt/h.

The cabinets 10 of the other zones 36, 37, less extended, can be equipped with smaller batteries, for example by 3.2 Ampere/h; each of those cabinets 10 will then contain eighteen 12 Volt, 3.2 Ampere/h, batteries; in this case, the size margin is greater than 3, having a nominal power of 690 Watt/h available.

Assuming an emergency autonomy of three hours, the cabinet 10 of the area 35 will be equipped with eighteen 12 Volt batteries, 18 Ampere/h each, in order to assure three autonomy hours, with a size margin of the batteries equal to 2.3 since the nominal power available from the batteries is equal to nearly 3900 Watt/h (1300 Watt * 3 hours).

In the areas 36 and 37, less extended, the 7 Ampere/h batteries assure however the required performances even in the case of three hours of autonomy, since in such case the power available is nearly 1500 Watt/h, i.e. 500 Watt * 3 hours and, therefore, the size margin remains greater than 2.

The over-size of the batteries 13 allows to control simultaneously the switching on in emergency of all the lighting apparatus till 50% of the luminous flux (with 56 Ampere/h batteries 13).

From the description made, the features of the centralized emergency lighting plant integrated with the ordinary lighting, object of the present invention, are clear, as clear are its advantages.

In particular, since the system is of the centralized battery type, the batteries, of the hermetic type, are housed in respective cabinets, on the ground and in the lowest position of the cabinets, and, thus, easily accessible.

Consequently, the batteries are easily replaceable, operate in the best possible conditions of temperature and recharging and are sized with good operating margins, without significantly affecting the total system cost, thanks to scale factors; therefore, a life of over 7 years is expected.

Moreover, the system diagnostics the batteries status and indicates to the user the need to replace them.

The system is also highly innovative with regard to the mode of the emergency supply of the lighting apparatus, since the supply electric lines of the lighting apparatus share on the same two copper cables the lighting apparatus which function in ordinary way and those ones which function also in emergency and every lighting apparatus automatically recognizes the emergency condition on the basis of the type of supply present at its power terminals.

Furthermore, any lighting apparatus can be programmed and configured by the control station of the system and is configured by radio to operate according to desired performance, which can also be changed at the will of the user at any time.

In the existing plant, this means that the system can be realized without changing the most expensive part of the installation, namely the pre-existing supply electric lines of the lighting apparatus, but only by acting on the supply electric board, with a significant competitive advantage.

Finally, the system is provided with supply emergency sources (the cabinets) of the distributed type, in the sense that the emergency cabinets are one for each supply board of the electric lighting lines and, therefore, every area retains its operation autonomy. Moreover, in case of fire, the risks due to possible interruptions of the cables linking the only source (the cabinet) and the various emergency areas related to it are avoided, as it can, instead, happen in the centralized plants with a single supply source which must serve more emergency areas; the radio connection of the emergency system assures, then, a high level of security.

It is clear, finally, that numerous variations can be made to the emergency lighting plant in question, without for this reason going out of the novelty principles inherent of the inventive idea, as it is clear that, in the practical implementation of the invention, materials, shapes and sizes of the illustrated details could be any depending on the needs and the same could be replaced with others technically equivalent.

## Claims

1. Centralized emergency lighting plant with functionalities integrated with ordinary lighting, of the type of centralised batteries (13) including one or more electric supply lines (19) of apparatus (11) for the ordinary lighting and for the emergency lighting, which is connected, through appropriate switches means (18) and/or disconnecting switches (34), to the electric supply network (26), **characterized in that** both lighting apparatus (11) which operate in an ordinary way and the lighting apparatus (11) which operate in emergency are connected to said supply lines (19).

2. Plant according to claim 1, **characterized in that** each lighting apparatus (11) includes at least one electronic supplier (31) for controlling fluorescent lamps (32) provided in said apparatus (11), said electronic supplier (31) being connected to at least one two-way radio (33) for the control, the programming and the configuration of each lighting apparatus (11), by at least a control station (27), so that each lighting apparatus (11) can be configured, through radio (R), to operate according to desired performance, changeable by the user at any time.

3. Plant according to claim 2, **characterized in that** said lighting apparatus (11) switch on in ordinary mode or in emergency according to at least one distinctive parameter of the signal wave-form of power supply present at the input, said electronic control supplier being able to decode said at least one parameter of the signal wave-form of the power supply in the early moments of the presence of the supply at the input in order to determine its own operation state, from the shutdown to the switching on in an ordinary lighting state, to the switching on in an emergency lighting state.

4. Plant according to claim 2, **characterized in that** said configuration phase, through radio (R), of each lighting apparatus (11) includes a programming and control mode of the active way of functioning of the ordinary lighting, such as the autodimmer and/or a fixed power, of the way of functioning in emergency, such as at least one level of dimmer or desired and programmable light intensity and/or a switching on in an emergency state and/or at least one predetermined and/or programmable emergency interval time, and of the values of at least part of the operational parameters.

5. Plant according to claim 1, **characterized in that** distributed emergency supply sources are provided which includes at least one emergency cabinet (10) for each electric supply board (24) of said supply electric lines (19), so that each area (35, 36, 37) of an environment in which the plant is installed retains its operation autonomy.

6. Plant according to claim 5 **characterized in that** every cabinet (10) includes an electronic piloting stage (23) connected to the centralized batteries (13).

7. Plant according to claim 6, **characterized in that** said centralized batteries (13) are housed within each cabinet (10), in an easily accessible location.

8. Plant according to claim 2, **characterized in that** said control station (27) diagnostics the batteries (13) and indicates to the user the necessity to replace them.

9. Plant according to claim 1, **characterized in that** the same ordinary lighting apparatus (11) are also emergency lighting apparatus (11).

10. Plant according to claim 6, **characterised in that** said electronic piloting stage (23) of every cabinet (10) includes at least one battery charger of said centralized batteries (13), measurement instruments of the presence of the supply network on controlled electric lines (28), at least one electronic processing unit of the operation logic and of the diagnostics of the plant and power cards, suitable to provide supply power at the output, through first electric emergency lines (20, 21), to a particular group of lighting apparatus (11), and suitable to control, through second electric emergency lines (39, 40), at least one remote control switch (12) for each electric separated supply line (19) of each series of lighting apparatus (11).

11. Plant according to claim 10, **characterized in that** said remote control switches (12) are connected in such a way that, in normal lighting conditions, the lighting apparatus (11) are supplied by the electric line (17) of the ordinary supply power network (26) through said switches means (18) and/or disconnecting switches (34), while, in emergency lighting conditions, said remote control switches (12) are automatically energized, in order to provide the emergency electric energy generated by the centralized batteries (13) of the cabinet (10) to the electric supply lines (19) of the lighting apparatus (11) through said first electric emergency lines (20, 21).

12. Plant according to claim 2, **characterized in that** the lighting apparatus (11) programmed to remain switched on in case of emergency switch on reaching automatically a predetermined luminous flux, while the lighting apparatus (11) programmed to switch off in case of emergency remain off.

13. Plant according to claim 10, **characterized in that** said electronic piloting stage (23) of each cabinet (10) includes at least one two-way radio, which allows the communication with other cabinets (10) of the plant and with said control station (27), suitable to collect consumption information of the plant in ordinary operation and diagnostics information in emergency operation, to carry out the diagnostics, periodically and according to scheduled time, in ordinary functioning, and to establish an interface for the remote control of the plant.

14. Plant according to claim 5 **characterized in that** every cabinet (10) is connected, with dedicated electric lines (30), to signallers of exodus routes (29), operating in permanent or non-permanent lighting.
